# EUROPÄISCHE PATENTSCHRIFT

(11) **EP 3 187 906 B1**
(45) Veröffentlichungstag und Bekanntmachung des Hinweises auf die Patenterteilung: **14.02.2018**
(21) Anmeldenummer: 15203133.2
(22) Anmeldetag: 30.12.2015
(51) Int. Cl.: G01V 8/12, G01V 8/22

(54) **LICHTSCHRANKE**
LIGHT BARRIER
BARRIERE LUMINEUSE

(43) Veröffentlichungstag der Anmeldung: 05.07.2017
(73) Patentinhaber: SICK AG, 79183 Waldkirch/Breisgau (DE)
(72) Erfinder: Eble, Johannes, 79183 Waldkirch (DE)
(74) Vertreter: Manitz Finsterwald Patentanwälte PartmbB

(56) Entgegenhaltungen:
- EP-A1- 2 101 196
- EP-A1- 2 944 985
- DE-A1-102005 008 885

## Beschreibung

Die vorliegende Erfindung betrifft eine Lichtschranke mit zumindest einem Lichtsender zum Aussenden von Licht in einen Überwachungsbereich, mit zumindest einem Lichtempfänger zum Empfangen von Licht aus dem Überwachungsbereich und zumindest einem dem Lichtempfänger zugeordneten Strahlformungselement, welches dazu ausgelegt ist, Licht aus dem Überwachungsbereich auf den Lichtempfänger zu bündeln.

Unter dem Begriff "Lichtschranke" werden hier sowohl Lichtschranken mit genau einem Lichtsender und genau einem Lichtempfänger als auch Lichtschranken mit mehreren nebeneinander angeordneten Lichtsender/Lichtempfängerkombinationen verstanden. Letztere werden auch als Lichtgitter bezeichnet. Die genannten Lichtschranken können sowohl als Einweglichtschranken, bei denen sich Lichtsender und Lichtempfänger auf verschiedenen Seiten des Überwachungsbereichs befinden, als auch als Reflexionslichtschranken eingerichtet sein, bei welcher sich Lichtsender und Lichtempfänger auf derselben Seite des Überwachungsbereichs befinden und das von dem oder den Lichtsendern ausgesendete Licht durch geeignete Reflexionsmittel in Richtung des oder der Lichtempfänger reflektiert wird. Die Lichtsender senden Lichtstrahlen aus, welche auf die Lichtempfänger auftreffen. Eine Unterbrechung der Lichtstrahlen durch ein Objekt wird detektiert und ausgewertet.

Lichtschranken werden in großem Umfang für die Erkennung und Vermessung von Gegenständen auf Förderbahnen, zur Gepäckkontrolle auf Förderbändern, zur Türsteuerung in Aufzügen, für den Hand- oder Körperschutz bei Arbeitsmaschinen, für die Zugangskontrolle von Personen und Fahrzeugen usw. verwendet.

Als Lichtgitter ausgestaltete Lichtschranken umfassen in der Regel eine Sendereinheit mit in einem leistenförmigen Lichtgittergehäuse beabstandet angeordneten Lichtsendern und eine Empfangseinheit mit in einem ebenfalls leistenförmigen Lichtgittergehäuse entsprechend beabstandet angeordneten Lichtempfängern.

Das von dem oder den Lichtsendern ausgesendete Licht kann durch ein oder mehrere, dem jeweiligen Lichtsender nachgeordnete optische Funktionselemente, beispielsweise eine Linse und/oder Blende, in Richtung des jeweils zugeordneten Lichtempfängers gebündelt oder gelenkt werden. Das jeweils dem Lichtempfänger zugeordnete Strahlformungselement dient dazu, das Licht auf einem optoelektronischen Wandler des Lichtempfängers zu sammeln, um eine möglichst hohe Empfindlichkeit der Lichtschranke zu erreichen.

Neben anderen Maßnahmen kann eine hohe Empfindlichkeit beispielsweise dadurch erreicht werden, dass das Strahlformungselement, welches bei bekannten Lichtschranken beispielsweise als Sammellinse ausgebildet ist, eine möglichst große Apertur aufweist. Einer derartigen Optimierung sind jedoch dadurch Grenzen gesetzt, dass neben einer hohen Empfindlichkeit auch eine möglichst geringe Baugröße der Lichtschranke angestrebt wird, da anwendungsseitig der für den Einbau der Lichtschranke zur Verfügung stehende Bauraum oftmals begrenzt ist. Ein Maß für die Kompaktheit einer Lichtschranke, insbesondere bezüglich der Lichtempfängerseite, ist das sogenannte Aspektverhältnis. Das Aspektverhältnis kann als das Verhältnis zwischen der Gesamtbauhöhe einer Empfängereinheit zu der lateralen Ausdehnung des Strahlformungselements bzw. einer Empfangslinse definiert werden, wobei unter der Gesamtbauhöhe vorliegend der Abstand zwischen einer Oberfläche des Lichtempfängers und einer Lichteintrittsseite des Strahlformungselements bzw. einer Eintrittsfläche einer gegebenenfalls dem Strahlformungselement vorgelagerten Frontscheibe der Lichtempfängereinheit verstanden wird.

Bei bekannten Lichtschranken bzw. Lichtgittern beträgt die Gesamtbauhöhe beispielsweise 15 mm und der Durchmesser der Empfangslinse beispielsweise 5 mm, was zu einem Aspektverhältnis von 3 führt. Bei einem anderen bekannten Lichtgitter, bei dem die Empfangslinse jeweils in die Frontscheibe integriert ist, beträgt beispielsweise die Gesamtbauhöhe 13 mm und der Durchmesser der Empfangslinse 5,5 mm, so dass das Aspektverhältnis 2,4 beträgt.

Bei Lichtschranken bzw. Lichtgittern, die in einer Umgebung betrieben werden, welche spiegelnde oder remittierende Oberflächen aufweist, kann es vorkommen, dass trotz eines Objekts im Überwachungsbereich, welches den direkten Strahlengang zwischen Lichtsender und Lichtempfänger unterbricht, Sendelicht über die spiegelnden oder remittierenden Oberflächen um das Objekt herum zu dem oder den Lichtempfängern gelangen kann. Diese auch als Umspiegelung bezeichnete Fehlfunktion kann dazu führen, dass trotz vorhandenen Objekts kein entsprechendes Schaltsignal erzeugt wird, was jedoch aus Gründen der Zuverlässigkeit nicht nur bei sicherheitskritischen Anwendungen unbedingt vermieden werden soll.

EP 2 101 196 A1 offenbart einen optischen Sensor mit einem Lichtsender und einer Sendeoptik. Die Sendeoptik umfasst einen Konzentrator, der ein Lichtführungselement für die Sendelichtstrahlen bildet, wobei an der Mantelfläche des Konzentrators eine Totalreflexion der Sendelichtstrahlen erfolgt.

Es ist die Aufgabe der Erfindung, eine kompakt bauende Lichtschranke zu schaffen, welche unempfindlicher gegenüber einer Umspiegelung eines zu detektierenden Objekts und gegenüber Störlicht aus der Umgebung ist.

Die Lösung der Aufgabe erfolgt durch eine Lichtschranke mit den Merkmalen des Anspruchs 1. Erfindungsgemäß ist vorgesehen, dass das Strahlformungselement zumindest eine erste strahlformende Struktur aufweist, welche dazu ausgelegt ist, in die erste strahlformende Struktur eintretendes Licht in Abhängigkeit von dessen Eintrittswinkel zumindest teilweise einmal oder mehrmals an einer jeweiligen inneren Grenzfläche der ersten strahlformenden Struktur zu reflektieren, so dass sich der Austrittswinkel des aus der ersten strahlformenden Struktur austretenden Lichts von dem Eintrittswinkel unterscheidet.

Das Strahlformungselement erfüllt somit prinzipiell die Funktion einer Sammellinse, wobei jedoch durch die Ausnutzung der innerhalb der ersten strahlformenden Struktur stattfindenden Totalreflexion (auch als TIR von englisch: *total internal reflection* bezeichnet) eine große Ablenkung des in das Strahlformungselement eintretenden Lichts erreicht wird. Somit besteht ein großer Unterschied zwischen dem Eintritts- und Austrittswinkel, so dass das Strahlformungselement eine sehr kurze effektive Brennweite aufweist. Unter Eintrittswinkel bzw. Austrittswinkel wird derjenige Winkel verstanden, der zwischen einem eintretenden bzw. austretenden Lichtstrahl und einer gemeinsamen Bezugsachse (oder Bezugsebene), z.B. einer optischen Achse (optischen Ebene) des Strahlformungselements, eingeschlossen ist. Da das erfindungsgemäße Strahlformungselement nicht zwingend abbildende Eigenschaften wie eine Sammellinse mit einer klar definierten Brennweite aufweisen muss, kann die effektive Brennweite beispielsweise so definiert werden, dass ein parallel in das Strahlformungselement eintretendes Strahlenbündel nach seinem Durchtritt durch das Strahlformungselement im Bereich der effektiven Brennweite einen minimalen Durchmesser aufweist. Die Verwendung der auf einer Ausnutzung der Totalreflexion beruhenden ersten strahlformenden Struktur erlaubt es, ein Strahlformungselement zu schaffen, das eine große Apertur und eine kurze effektive Brennweite besitzt. Deshalb kann eine erfindungsgemäße Lichtschranke ein sehr kleines Aspektverhältnis und damit in vorteilhafter Weise eine kompakte Baugröße und zugleich eine hohe Empfindlichkeit aufweisen, so dass die Reichweite, d.h. der größtmögliche Abstand zwischen Sender und Empfänger, größer ist als bei herkömmlichen Lichtschranken.

Der Begriff der optischen Achse des Strahlformungselementes wird hier bei zum Beispiel im Wesentlichen rotationssymmetrischen Elementen verwendet, während der Begriff der optischen Ebene hier bei zum Beispiel im Wesentlichen linearsymmetrischen Elementen verwendet wird (siehe unten).

Es versteht sich, dass die durch das Strahlformungselement bzw. die erste strahlformende Struktur erzielte Änderung zwischen dem Eintritts- und Austrittswinkel nicht nur aufgrund der im Inneren der ersten strahlformenden Struktur stattfindenden Totalreflexion bewirkt werden kann, sondern zusätzlich gegebenenfalls auch durch Refraktion des Lichts beim Austritt des Lichts aus der ersten strahlformenden Struktur.

Die vorliegende Erfindung kann nicht nur bei einer Lichtschranke, welche genau einen Lichtsender und genau einen Lichtempfänger aufweist, zum Einsatz gelangen, sondern vorteilhafterweise auch bei einer auch als Lichtgitter bezeichneten Lichtschranke, bei welcher mehrere in Reihe angeordnete Paare von Lichtsendern und Lichtempfängern vorgesehen sind. Bei einem derartigen Lichtgitter können alle Lichtsender und alle Lichtempfänger jeweils in einer separaten Baueinheit (Sendereinheit bzw. Empfängereinheit) zusammengefasst sein. Alternativ kann ein solches Lichtgitter jedoch auch zwei Baueinheiten aufweisen, in denen jeweils Lichtsender und Lichtempfänger z.B. abwechselnd nebeneinander angeordnet sind. Die erfindungsgemäße Lichtschranke kann - auch bei der Ausgestaltung als Lichtgitter - sowohl als Einweglichtschranke als auch als Reflexionslichtschranke eingerichtet sein. Bei einem Lichtgitter können für jeden Empfänger einzelne Strahlformungselemente vorgesehen sein, oder die einzelnen Empfängern zugeordneten Strahlformungselemente können in einem Bauteil zusammengefasst sein.

Ein weiterer Vorteil der Erfindung besteht darin, dass das Maß der Ablenkung des in die erste strahlformende Struktur eintretenden Lichts stärker von dem Auftreffwinkel des Lichts auf das Strahlformungselement abhängt, als dies beispielsweise bei einer einfachen Sammellinse der Fall ist. Mit anderen Worten wird Licht, das parallel zu einer optischen Achse bzw. einer optischen Ebene des Strahlformungselements einfällt, weniger stark abgelenkt als schräg auf das Strahlformungselement auftreffendes Licht. Durch eine entsprechende Konfiguration, z.B. durch geeignete Platzierung und Dimensionierung des Lichtempfängers, kann dies dazu genutzt werden, dass Licht, welches den Lichtempfänger aufgrund einer unerwünschten Umspiegelung erreichen würde, d.h. über einen Umweg über eine reflektierende oder remittierende Oberfläche, so abgelenkt wird, dass es nicht oder zumindest nur zu einem geringeren Teil von dem Lichtempfänger detektiert wird als Licht, das den Lichtempfänger auf dem regulären Ausbreitungsweg erreicht. Mit anderen Worten wird der "Sichtwinkel" des Empfängers reduziert. Zudem wird der Einfluss von Störlicht aus der Umgebung reduziert.

Die Lichtschranke kann demnach so eingerichtet sein, dass der auf den Lichtempfänger gelenkte Bruchteil von schräg auf das Strahlformungselement auftreffendem Licht kleiner ist als derjenige Bruchteil, der bei gleichem Auftreffwinkel von einer anstelle des Strahlformungselements vorgesehenen Sammellinse, deren Brennweite einer effektiven Brennweite des Strahlformungselements entspricht, auf den Lichtempfänger gelenkt würde.

Die genannten Bruchteile sind hierbei jeweils auf eine Lichtmenge bezogen, die bei senkrecht auf das Strahlformungselement, d.h. parallel zur optischen Achse bzw. einer optischen Ebene des Strahlformungselements, auftreffendem Licht den Lichtempfänger erreicht.

Gemäß einer vorteilhaften Ausführungsform der Erfindung ist die erste strahlformende Struktur an einer dem Lichtempfänger zugewandten Seite des dem Lichtempfänger zugeordneten Strahlformungselements vorgesehen. Dies führt zu einer besonders kompakten Bauweise und verhindert zudem, dass die ersten strahlformenden Strukturen versehentlich beschädigt werden können, da sie sich bei dieser Anordnung in der Regel im Inneren eines Lichtempfängergehäuses befinden.

Gemäß einer weiteren vorteilhaften Ausführungsform weist die erste strahlformende Struktur zwei einander gegenüberliegende Grenzflächen auf, welche sich zumindest hinsichtlich ihres Neigungswinkels in Bezug auf eine optische Achse bzw. eine optische Ebene des Strahlformungselements voneinander unterscheiden. Hierdurch lassen sich die gewünschten Ablenkungseigenschaften des Strahlformungselements auf besonders günstige Weise erreichen.

Vorteilhafterweise weist das Strahlformungselement mehrere erste strahlformende Strukturen auf, wobei sich die mehreren ersten strahlformenden Strukturen voneinander unterscheiden können. Insbesondere können die jeweiligen ersten strahlformenden Strukturen unterschiedliche Neigungswinkel ihrer Grenzflächen aufweisen, wobei auch die Winkel, die zwischen den Grenzflächen einer jeweiligen ersten strahlformenden Struktur eingeschlossen sind, bei den mehreren ersten strahlformenden Strukturen unterschiedlich sein können.

Vorteilhafterweise sind die Neigungswinkel der Grenzflächen derart gewählt, dass sich der Abstand der Grenzflächen zueinander in Richtung eines distalen Endes der Struktur vermindert. Unter dem distalen Ende wird das freie, in der Regel dem Lichtempfänger zugewandte Ende der ersten strahlformenden Struktur verstanden. Somit verlaufen die Grenzflächen einer Struktur in einem spitzen Winkel zueinander.

Es hat sich ferner als vorteilhaft erwiesen, wenn zumindest eine der Grenzflächen gekrümmt ist. Dadurch lassen sich die Abbildungseigenschaften der ersten strahlformenden Struktur noch weiter optimieren.

Gemäß noch einer weiteren vorteilhaften Ausführungsform der Erfindung weist das Strahlformungselement zumindest eine zweite strahlformende Struktur auf, welche auf einer der ersten strahlformenden Struktur gegenüberliegenden Seite des Strahlformungselements angeordnet ist und dazu ausgelegt ist, die Ausbreitungsrichtung von durchtretendem Licht refraktiv zu verändern. Die zweite strahlformende Struktur leitet somit Licht gezielt in Richtung der ersten strahlformenden Struktur, so dass sich die von der ersten strahlformenden Struktur erfasste Lichtmenge im Vergleich zu einem ansonsten gleichen Strahlformungselement ohne eine zweite strahlformende Struktur erhöht.

Gemäß einer vorteilhaften Ausgestaltung ist die zweite strahlformende Struktur konvex gekrümmt, so dass diese die Funktion einer Sammellinse erfüllt.

Vorteilhafterweise ist die zweite strahlformende Struktur einer jeweiligen ersten strahlformenden Struktur zugeordnet und insbesondere in der Hauptausbreitungsrichtung des Lichtes von dieser beabstandet. Dadurch wird zumindest ein Großteil des von der zweiten strahlformenden Struktur erfassten Lichtes tatsächlich auch in die erste strahlformende Struktur eingeleitet, so dass eine größtmögliche Lichtmenge von dem Lichtempfänger erfasst wird. Die Apertur der zweiten strahlformenden Struktur ist insbesondere größer als die Apertur der zugeordneten ersten strahlformenden Struktur.

Gemäß einer vorteilhaften Ausführungsform ist einer jeweiligen ersten strahlformenden Struktur eine jeweilige zweite strahlformende Struktur derart zugeordnet, dass durch die zweite strahlformende Struktur hindurch in das Strahlformungselement eintretendes Licht in Richtung auf die erste strahlformende Struktur gelenkt, insbesondere gebündelt wird.

Besonders wirksam ist es, wenn die erste strahlformende Struktur und/oder die zweite strahlformende Struktur rotationssymmetrisch um eine optische Achse des Strahlformungselements ausgebildet sind. Falls mehrere erste bzw. zweite strahlformende Strukturen vorhanden sind, sind diese vorteilhafterweise konzentrisch zueinander ausgebildet.

Insbesondere bei einer nicht rotationssymmetrischen Anordnung von Lichtempfängern bzw. Lichtsendern, also zum Beispiel bei einem Lichtgitter mit mehreren nebeneinander angeordneten Lichtempfängern und -sendern kann aber auch vorgesehen sein, dass die strahlformenden Strukturen linearsymmetrisch in Richtung der Erstreckung des Lichtgitters sind. In diesem Fall hat das Strahlformungselement eine Symmetrieebene, die parallel zur linearen Erstreckung ist und hier - in Anlehnung an den Begriff der optische Achse für rotationssymmetrische Anordnungen - als optische Ebene bezeichnet wird.

Erfindungsgemäß weist zumindest eines der Strahlformungselemente einen zentralen Bereich auf, welcher keine der genannten strahlformenden Strukturen aufweist und zumindest auf einer Seite plan ist. Der zentrale Bereich ist insbesondere von den strahlformenden Strukturen umgeben. Da durch den zentralen Bereich im Wesentlichen zentrales Empfangslicht hindurchtritt, ist hier eine Ablenkung dieses Lichts nicht zwingend notwendig, damit es den Lichtempfänger erreichen kann. Ein weiterer Vorteil dieser Ausführungsform wird im Zusammenhang mit einer weiteren nachfolgend erläuterten erfindungsgemäßen Ausgestaltung ersichtlich.

Erfindungsgemäß ist der zentrale Bereich des den Lichtempfänger zugeordneten Strahlformungselements lichtundurchlässig. Die Lichtundurchlässigkeit kann durch eine geeignete Materialwahl, insbesondere aber auch durch eine lichtundurchlässige Beschichtung, Bedruckung oder eine aufgesetzte lichtundurchlässige Blende erreicht werden. Auf diese Weise lässt sich eine unerwünschte Umspiegelung noch weiter unterdrücken, da schräg einfallendes Licht, welches durch den zentralen Bereich auf den Lichtempfänger trifft, zumindest bei kleinen Einfallswinkeln zu einem Großteil vom Lichtempfänger erfasst wird. Die durch die Ausblendung des auf den zentralen Bereich auftreffenden Lichts etwas reduzierte Gesamtempfindlichkeit kann dabei hingenommen werden.

Erfindungsgemäß weist die Lichtschranke zumindest ein weiteres, dem Lichtsender zugeordnetes Strahlformungselement auf, welches zu dem dem Lichtempfänger zugeordneten Strahlformungselement zumindest bezüglich der strahlformenden Strukturen identisch ausgebildet ist. Insbesondere kann dieses dem Lichtsender zugeordnete Strahlformungselement ebenfalls einen zentralen Bereich aufweisen, der keine der genannten strahlformenden Strukturen aufweist und insbesondere zumindest auf einer Seite plan ist. In der Regel werden strahlformende Strukturen bei der Strahlformung des Sendelichts nicht zwingend benötigt, da zumeist Lichtsender eingesetzt werden, die bauartbedingt bereits gebündeltes Licht emittieren. Als Lichtsender können beispielsweise Laser, Oberflächenemitter (auch als VCSEL von Englisch: *vertical-cavity surface-emitting laser* bezeichnet) oder LEDs, insbesondere mit integrierter Sendelinse, vorgesehen sein. Es ist jedoch auch nicht ausgeschlossen, dass die strahlformende Struktur oder Strukturen des dem Lichtsender zugeordneten Strahlformungselements einer Strahlformung des von dem Lichtsender ausgesendeten Lichts dienen. Das dem Lichtsender zugeordnete Strahlformungselement wird vorteilhafterweise so angeordnet, dass die erste strahlformende Struktur dem Lichtsender zugewandt ist. Durch die Verwendung von Strahlformungselementen, die sender- und empfängerseitig baugleich sind, verringert sich der Konstruktions- und Fertigungsaufwand, da z.B. sender- und empfängerseitig identische Frontscheiben mit integrierten Strahlformungselementen verwendet werden können.

Gemäß einer besonders vorteilhaften Ausführungsform der Erfindung umfasst die Lichtschranke zumindest ein Gehäuse, welches eine Frontscheibe aufweist, wobei das Strahlformungselement bzw. die Strahlformungselemente in die Frontscheibe integriert ist/sind und insbesondere einstückig mit der Frontscheibe ausgebildet ist/sind. Hierdurch wird eine besonders kompakte Bauform erreicht, welche zu einem besonders kleinen Aspektverhältnis der erfindungsgemäßen Lichtschranke führt. Insbesondere bei einer einstückigen Ausbildung von Frontscheibe und Strahlformungselement lassen sich die Fertigungskosten insbesondere aufgrund eines reduzierten Aufwandes beim Formenbau deutlich reduzieren. Da sich eine solche Frontscheibe - wie vorstehend bereits erwähnt - sowohl für die Lichtempfänger als auch die Lichtsender verwenden lässt, können alle Frontscheiben der Lichtschranke identisch ausgebildet sein, was aufgrund des Gleichteileprinzips wiederum zu einer Kosteneinsparung führt. Vorzugsweise kann eine gemeinsame Frontscheibe für alle Lichtsender bzw. Lichtempfänger einer Baueinheit verwendet werden.

Gemäß einer vorteilhaften Abwandlung kann die Frontscheibe einstückig mit dem Gehäuse der Lichtschranke ausgebildet sein. Hierfür wird beispielsweise ein transparentes Kunststoffmaterial verwendet, wobei Bereiche, bei denen eine Lichtdurchlässigkeit unerwünscht ist, mit einer lichtundurchlässigen Beschichtung versehen werden können. Alternativ kann das Gehäuse auch einstückig aus mehreren Kunststoffkomponenten mit verschiedenen Transmissionsgraden im gleichen Prozessschritt hergestellt werden.

Weitere vorteilhafte Ausführungsformen der Erfindung ergeben sich aus den Unteransprüchen, der Beschreibung und den Zeichnungen.

Die Erfindung wird anhand eines Ausführungsbeispiels mit Bezug auf die Zeichnungen beschrieben. Es zeigen:
- Fig. 1a und b: Querschnittsdarstellungen von Empfängereinheit (Fig. 1a) und Sendereinheit (Fig. 1b) einer erfindungsgemäßen Lichtschranke;
- Fig. 2 bis 5: simulierte Strahlengänge für Empfangslicht, welches unter unterschiedlichen Empfangswinkeln von der Empfängereinheit gemäß Fig. 1a empfangen wird; und
- Fig. 6 und 7: Diagramme, in denen die Amplitude des Empfangssignals in Abhängigkeit von dem Empfangswinkel dargestellt ist.

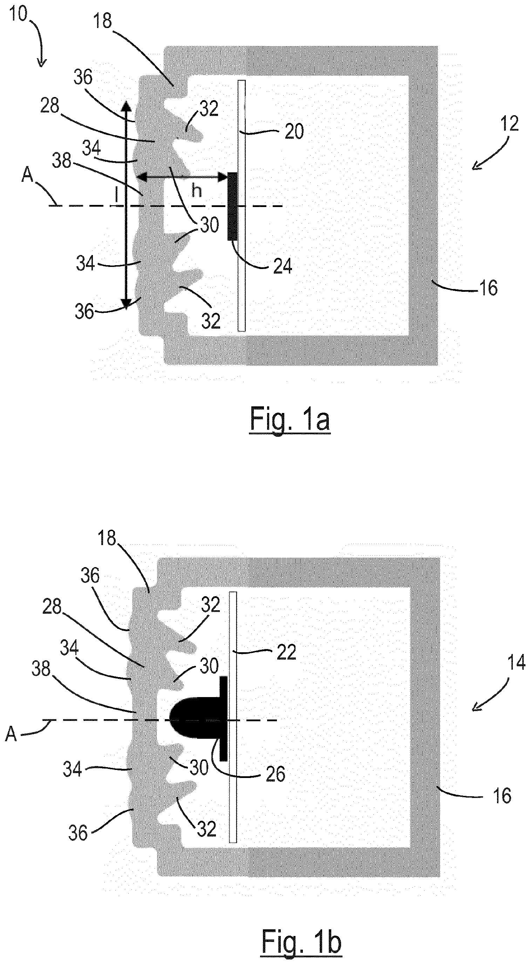

Eine erfindungsgemäße Lichtschranke 10 umfasst eine Empfängereinheit 12 (Fig. 1a) und eine Sendereinheit 14 (Fig. 1b), welche als Lichtschranke im engeren Sinne mit einem Sender-/Empfängerpaar oder als Lichtgitter mit mehreren Sender-/Empfängerpaaren ausgestaltet sein kann. Bei einer Transmissionslichtschranke stehen sich zum Beispiel zumindest eine Sendereinheit und zumindest eine zugeordnete Empfängereinheit auf unterschiedlichen Seiten eines Überwachungsraumes gegenüber. Die Empfängereinheit 12 und die Sendereinheit 14 umfassen ein jeweiliges Gehäuse 16, welches eine zumindest teilweise transparente Frontplatte 18 aufweist. Die Gehäuse 16 und Frontplatten 18 von Empfänger- und Sendeinheit 12, 14 sind jeweils baugleich.

Im Inneren des Lichtempfängers 12 ist eine Leiterplatte 20 vorgesehen, auf der mindestens ein Lichtempfänger 24 angeordnet ist, welcher auftreffendes Empfangslicht in elektrische Empfangssignale umwandelt.

Die Sendereinheit 14 weist in entsprechender Weise eine Leiterplatte 22 auf, auf welcher mindestens ein Lichtsender 26, beispielsweise eine LED, ein Laser oder ein VCSEL, angeordnet ist. Der Lichtsender 26 kann gegebenenfalls ein strahlformendes Element umfassen, welches das Sendelicht zu einem parallelen Strahlenbündel formt.

In die Frontplatten 18 sind jeweilige Strahlformungselemente 28 integriert, welche im vorliegenden Ausführungsbeispiel sender- und empfängerseitig identisch ausgestaltet sind. Grundsätzlich können in einer Abwandlung die sender- und empfängerseitigen Strahlformungselemente auch unterschiedlich ausgestaltet sein. Auf der Innenseite eines jeweiligen Strahlformungselements 28 sind zwei erste strahlformende Strukturen 30, 32 vorgesehen, welche sich in Richtung auf den Lichtempfänger 24 bzw. den Lichtsender 26 hin erstrecken. Die ersten strahlformenden Strukturen 30, 32 besitzen eine im Querschnitt etwa keilförmige Gestalt, wobei sich die Neigungswinkel der die ersten strahlformenden Strukturen 30, 32 begrenzenden Flächen in Bezug auf eine optische Achse A des Strahlformungselements 28 voneinander unterscheiden. Der zwischen den Grenzflächen der ersten strahlformenden Struktur 30 eingeschlossene Winkel ist etwas größer als der zwischen den Grenzflächen der ersten strahlformenden Struktur 32 eingeschlossene Winkel. Die Erstreckung der ersten strahlformenden Struktur 30 in Richtung der optischen Achse A ist hingegen etwas kleiner als die Erstreckung der ersten strahlformenden Struktur 32. Die Übergänge zwischen den Grenzflächen der ersten strahlformenden Strukturen 30, 32 können, wie dargestellt, aus fertigungstechnischen Gründen ausgerundet sein. Dies kann zum Beispiel durch Fertigung in einem Extrusionsverfahren hervorgerufen werden, das andererseits sehr einfach und kostengünstig ist.

Auf den Außenseiten der Frontscheiben 18 sind konvexe zweite strahlformende Strukturen 34, 36 vorgesehen, wobei die Strukturen 34 den Strukturen 30 und die Strukturen 36 den Strukturen 32 zugeordnet sind. Die strahlformenden Strukturen 30 bis 36 sind zum Beispiel rotationssymmetrisch um die optische Achse A herum ausgebildet, so dass sie in der Draufsicht ringförmig erscheinen.

In der Mitte eines jeweiligen Strahlformungselements 28 ist um die optische Achse A herum ein beidseitig planer zentraler Bereich 38 vorgesehen, welcher frei von strahlformenden Strukturen ist.

In Fig. 1a sind die empfängerseitige Gesamtbauhöhe h und die Apertur I bzw. der Durchmesser des Strahlformungselements 28 durch Doppelpfeile gekennzeichnet. Das eingangs erwähnte Aspektverhältnis der Empfängereinheit 12 ergibt sich aus der Gesamtbauhöhe h dividiert durch die Apertur I. Die Gesamtbauhöhe h kann beispielsweise 3,2 mm betragen und die Apertur I des Strahlformungselements 28 7,4 mm, woraus sich ein sehr kleines Aspektverhältnis von 0,43 ergibt.

Im Vergleich hierzu weisen herkömmliche Lichtschranken bzw. Lichtgitter mit separater Linse ohne auf dem Prinzip der Totalreflexion basierende Strukturen beispielsweise eine Gesamtbauhöhe h von 15 mm und eine Apertur I von 5 mm auf, so dass das Aspektverhältnis 3 beträgt.

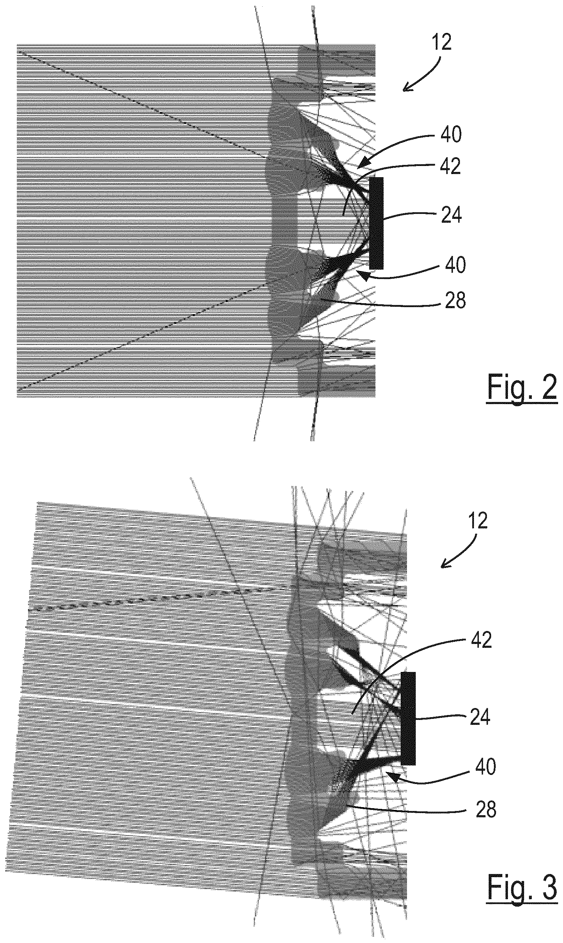

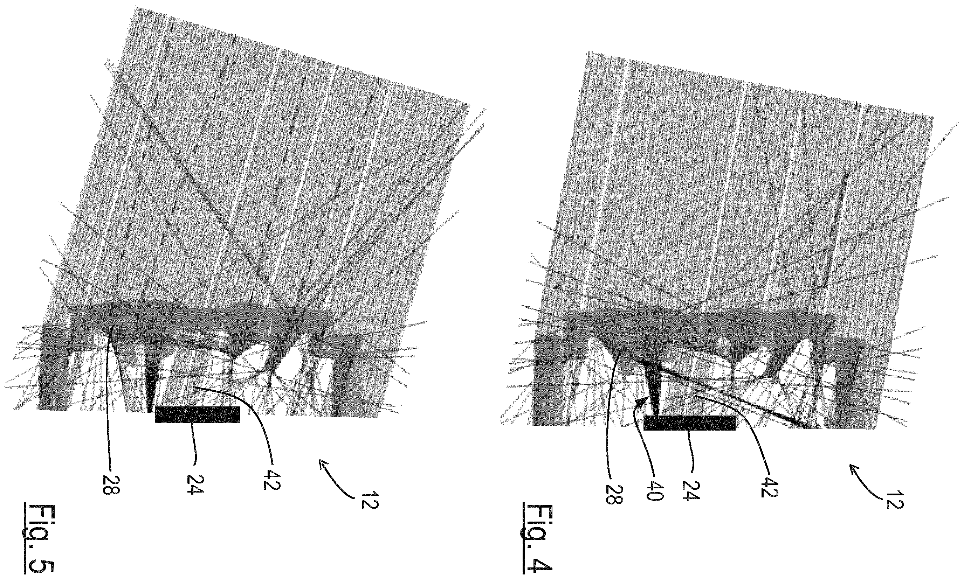

In Fig. 2 bis 5 sind simulierte Strahlengänge für verschiedene Empfangswinkel im Bereich der Empfängereinheit 12 dargestellt, wobei die Empfängereinheit 12 jeweils nur mit einem dem Lichtempfänger 24 umfassenden Teilbereich dargestellt ist. Das Empfangslicht tritt als paralleles Strahlenbündel von links kommend in das Strahlformungselement 28 ein. Der Empfangs- oder Eintrittswinkel beträgt 0° in Fig. 2, 5° in Fig. 3, 10° in Fig. 4 und 15° in Fig. 5.

Wie insbesondere in Fig. 2 gut zu erkennen ist, bündeln zunächst die zweiten strahlformenden Strukturen 34, 36 (Fig. 1a) das Empfangslicht, so dass im Vergleich mit einer planen Außenseite des Strahlformungselements 28 ein größerer Anteil des Empfangslichts in die ersten strahlformenden Strukturen 30, 32 eintreten kann und nicht auf die zwischen den ersten strahlformenden Strukturen 30, 32 liegenden Bereiche fällt. Das derart gebündelte, konvergente Empfangslicht trifft im Inneren der ersten strahlformenden Strukturen 30, 32 auf deren Wandungen oder Grenzflächen, so dass in Abhängigkeit von dem Auftreffwinkel eine Totalreflexion stattfindet und das Licht auf eine gegenüberliegende Wandung oder Grenzfläche umgelenkt wird. Aufgrund der unterschiedlichen Neigungswinkel der Grenzflächen der jeweiligen ersten strahlformenden Strukturen 30, 32 trifft das Licht auf die genannte gegenüberliegende Grenzfläche unter einem anderen Winkel auf, so dass je nach Auftreffwinkel, der unter anderem auch von dem Empfangswinkel abhängt, keine Totalreflexion bei diesem zweiten Auftreffen auf eine Grenzfläche stattfindet und das Licht wieder aus den ersten strahlformenden Strukturen 30, 32 austritt, wobei das Licht beim Austritt gebrochen wird. Insbesondere in Abhängigkeit von den Auftreffwinkeln, den Neigungswinkeln der Grenzflächen und der räumlichen Ausdehnung der ersten strahlformenden Strukturen 30, 32 kann auch eine mehrmalige innere Totalreflexion stattfinden.

In Fig. 2 ist dabei gut zu erkennen, dass bei der gezeigten Ausgestaltung vier Empfangslichtbündel 40 auf den Empfänger 24 treffen, die jeweils durch eine Kombination aus den strahlformenden Strukturen 32 und 36 einerseits bzw. 30 und 34 andererseits geformt wurden.

Außerdem trifft auch das durch den zentralen Bereich 38 einfallende Empfangslicht 42 auf den Empfänger 24.

Bei einem Einfallswinkel von 5° (Fig. 3) ist bereits erkennbar, dass nur noch drei Strahlenbündel 40 existieren, die auf den Empfänger 24 fallen.

In Fig. 4 ist nur noch ein Strahlenbündel 40 erkennbar, das auf den Empfänger 24 fällt, nachdem hier der Empfangswinkel bereits 10° beträgt.

Schließlich ist bei einem Empfangswinkel von 15° (Fig. 5) erkennbar, dass kein Strahlenbündel mehr auf den Empfänger 24 fällt, so dass hier nur noch das Empfangslicht 42 auf den Empfänger 24 fällt, das durch den zentralen Bereich 38 hindurchgetreten ist.

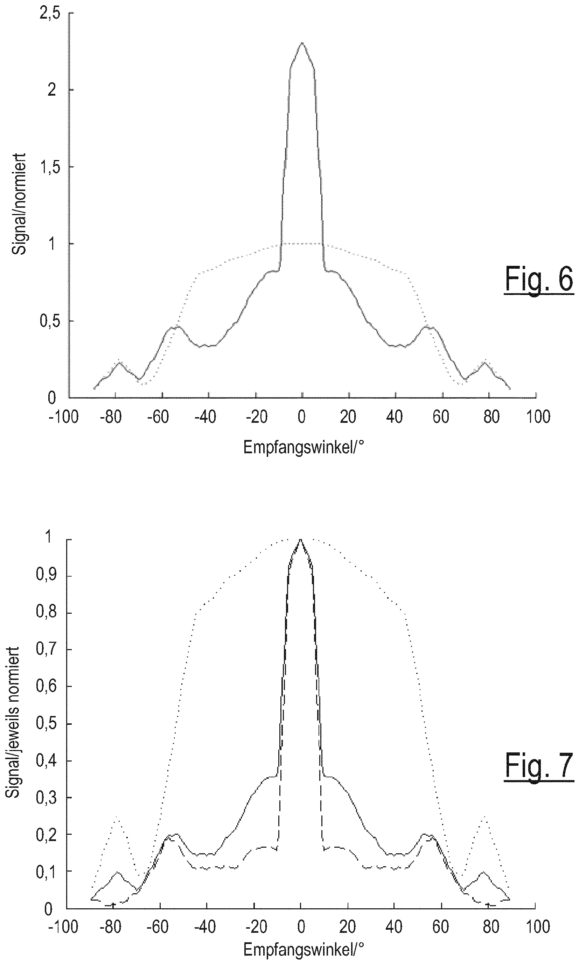

Wie ein Vergleich der Fig. 2 bis 5 erkennen lässt, tritt mit zunehmendem Empfangswinkel ein deutlich geringerer Bruchteil des Empfangslichts auf den Lichtempfänger 24. Entsprechende Empfangssignalverläufe gemäß Fig. 6 und 7 verdeutlichen dies. In Fig. 6 und 7 ist die Amplitude des Empfangssignals in Abhängigkeit von dem Empfangswinkel aufgetragen, wobei die durchgezogene Linie den Verlauf unter Verwendung eines erfindungsgemäßen Strahlformungselements 28 gemäß der beschriebenen Ausführungsform repräsentiert. Die gepunktete Linie repräsentiert als Vergleich jeweils den Empfangssignalverlauf ohne Strahlformungselement.

In Fig. 6 wurden die Empfangssignalverläufe auf das Maximum des Empfangssignals ohne Strahlformungselement normiert. In Fig. 7 wurden alle Empfangssignalverläufe auf ihr jeweiliges Maximum normiert.

Aus den Strahlengangsimulationen (Fig. 2 bis 5) und den Empfangssignalverläufen (Fig. 6 und 7) wird ersichtlich, dass Empfangslicht, welches unter einem von 0° verschiedenen Empfangswinkel auf den Lichtempfänger 24 trifft, durch die optischen Eigenschaften des Strahlformungselements 28 stark unterdrückt wird. Dadurch wird weitgehend verhindert, dass Licht aufgrund von Umspiegelung ein im direkten Strahlengang zwischen Sender und Empfänger unterbrechendes Objekt umgeht und es dadurch zu einer Fehlerfassung des Objekts kommt. Auch schräg einfallendes Störlicht wird stärker unterdrückt.

Die Ausblendung von derartigem Umspiegelungslicht kann gemäß einer Abwandlung des vorstehend beschriebenen Ausführungsbeispiels noch dadurch gesteigert werden, dass der zentrale Bereich 38 der Empfängereinheit 12 lichtundurchlässig gemacht wird, beispielsweise durch Aufbringen einer lichtundurchlässigen Beschichtung, Bedruckung oder einer Blende. Da nämlich der zentrale Bereich 38 frei von strahlformenden Strukturen ist, besteht hier nur eine geringe Winkelabhängigkeit des aus diesem Bereich erfassten Empfangslichts, wie ein Vergleich der Fig. 2 bis 5 zeigt. Wenn nun dieses Empfangslicht ausgeblendet wird, vermindert sich der Anteil des unabhängig vom Empfangswinkel erfassten Lichtes, so dass die Ausblendung von auf Umspiegelung beruhendem Empfangslicht weiter gesteigert werden kann, wobei dies jedoch zu einer etwas geringeren Gesamtempfindlichkeit führt. Die gestrichelte Kurve in Fig. 7 zeigt einen entsprechenden Empfangssignalverlauf unter Verwendung eines Strahlformungselementes, bei dem der mittlere Bereich 38 geschwärzt ist, wobei man erkennt, dass das System noch robuster gegenüber den beschriebenen unerwünschten Umspiegelungen und Störlicht ist.

Senderseitig ist der zentrale Bereich 38 in der Regel lichtdurchlässig ausgeführt. Obwohl somit bei einer Ausführungsform mit empfängerseitig geschwärztem zentralem Bereich 38 nur die empfängerseitigen Frontscheiben 18 bzw. Strahlformungselemente 28 mit der lichtundurchlässigen Schicht versehen werden, wird das Gleichteileprinzip nur unwesentlich beeinträchtigt, da der hierfür notwendige Fertigungsschritt für die betreffenden Bauteile separat durchgeführt werden kann und die übrigen, üblicherweise vorhergehend durchgeführten Fertigungsschritte nicht beeinflusst.

Die erfindungsgemäße Lichtschranke zeichnet sich aufgrund ihres sehr kleinen Aspektverhältnisses durch eine kompakte Baugröße und eine hohe Empfindlichkeit aus, so dass die Reichweite, d.h. der größtmögliche Abstand zwischen Sender und Empfänger, größer ist als bei herkömmlichen Lichtschranken. Zudem werden Fehlfunktionen aufgrund von Umspiegelung eines zu detektierenden Objekts oder aufgrund von Störlicht zuverlässig vermieden.

Ein Lichtgitter weist zum Beispiel mehrere Empfängereinheiten bzw. Sendereinheiten auf, die in Fig. 1a bzw. Fig. 1b entlang einer Linie senkrecht zur Figurenebene nebeneinander angeordnet sind. Beispielsweise können sich bei einem Transmissionslichtgitter die Empfängereinheiten alle auf einer Seite und die Sendereinheiten alle auf der anderen Seite des Lichtgitters befinden. Alternativ können sich bei einem Transmissionslichtgitter die Sendereinheiten und Empfängereinheiten zum Beispiel auf beiden Seiten des Lichtgitters jeweils abwechseln. Bei einem Lichtgitter kann vorgesehen sein, dass die Strahlformungselemente einer Seite alle in einem Bauteil integriert gefertigt sind, oder jedem Empfänger/Sender ein einzelnes Bauteil mit nur einem Strahlformungselement zugeordnet ist.

Bei einer weiteren kostengünstigen Ausgestaltung für ein Lichtgitter sind die Strahlformungselemente 28 nicht einzeln rotationssymmetrisch um eine optische Achse A sondern linear symmetrisch. Bezugszeichen A bezeichnet in diesem Fall eine sich senkrecht zur Figurenebene erstreckende zentrale optische Ebene.

Dies entspricht einer Ausgestaltung, in der die Fig. 1a und 1b Querschnitte darstellen würden, die senkrecht zur Linearerstreckung der Strahlformungselemente 28 ausgeführt sind. Bezugszeichen A würde in einer solchen Ausgestaltung nicht die optische Achse eines rotationssymmetrischen Elementes, sondern die eine zentrale optische Ebene darstellen. Die mit Bezug zu den Fig. 1a und 1b als rotationssymmetrisch geschilderten totalreflektierenden bzw. refraktiven Strukturen 30, 32, 34, 36 würden sich bei einer solchen Ausgestaltung ebenfalls senkrecht zur Figurenebene linear erstrecken.

Auf diese Weise lässt sich ein Lichtgitter gestalten, bei dem mehrere Sender 26 bzw. Empfänger 24 nebeneinander angeordnet sind, wobei auf jeder Seite des Lichtgitters nur ein sich linear erstreckendes Strahlformungselement 28 vorgesehen ist, das für den beschriebenen strahlformenden Effekt zuständig ist.

Zwar beschränkt sich dann dieser strahlformende Effekt auf die in Fig. 1a und 1b sichtbare Figurenebene, jedoch ist eine solche lineare Ausgestaltung besonders kostengünstig und einfach herstellbar, wobei das Strahlformungselement 28 z.B. besonders einfach als Extrusionsprofil hergestellt werden kann.

### Bezugszeichenliste

- 10: Lichtschranke
- 12: Empfängereinheit
- 14: Sendereinheit
- 16: Gehäuse
- 18: Frontscheibe
- 20, 22: Leiterplatte
- 24: Lichtempfänger
- 26: Lichtsender
- 28: Strahlformungselement
- 30, 32: erste strahlformende Struktur
- 34, 36: zweite strahlformende Struktur
- 38: zentraler Bereich
- 40: Strahlenbündel
- 42: zentrales Empfangslicht

- A: optische Achse / zentrale optische Ebene
- h: Gesamtbauhöhe
- I: Apertur

## Patentansprüche

1. Lichtschranke (10) mit zumindest einem Lichtsender (26) zum Aussenden von Licht in einen Überwachungsbereich, zumindest einem Lichtempfänger (24) zum Empfangen von Licht aus dem Überwachungsbereich und zumindest einem dem Lichtempfänger (24) zugeordneten Strahlformungselement (28), welches dazu ausgelegt ist, Licht aus dem Überwachungsbereich auf den Lichtempfänger (24) zu bündeln,
**dadurch gekennzeichnet,**
**dass** das Strahlformungselement (28) zumindest eine erste strahlformende Struktur (30, 32) aufweist, welche dazu ausgelegt ist, in die erste strahlformende Struktur (30, 32) eintretendes Licht in Abhängigkeit von dessen Eintrittswinkel zumindest teilweise einmal oder mehrmals an einer jeweiligen inneren Grenzfläche der ersten strahlformenden Struktur (30, 32) zu reflektieren, so dass sich der Austrittswinkel des aus der ersten strahlformenden Struktur (30, 32) austretenden Lichts von dem Eintrittswinkel unterscheidet, dass zumindest ein weiteres, dem Lichtsender (26) zugeordnetes Strahlformungselement (28) vorgesehen ist, welches zumindest bezüglich der strahlformenden Strukturen (30 - 36) identisch zu dem Strahlformungselement (28) ausgebildet ist, das dem Lichtempfänger (24) zugeordnet ist, dass zumindest eines der Strahlformungselemente (28) einen zentralen, eine optische Achse (A) oder eine optische Ebene des Strahlformungselements (28) umgebenden Bereich (38) aufweist, welcher keine der genannten strahlformenden Strukturen (30 - 36) aufweist und zumindest auf einer Seite plan ist, und
**dass** der zentrale Bereich (38) des dem Lichtempfänger (24) zugeordneten Strahlformungselements (28) lichtundurchlässig ist.

2. Lichtschranke (10) nach Anspruch 1,
**dadurch gekennzeichnet,**
**dass** die erste strahlformende Struktur (30, 32) an einer dem Lichtempfänger (24) zugewandten Seite des dem Lichtempfänger (24) zugeordneten Strahlformungselements (28) vorgesehen ist.

3. Lichtschranke (10) einem der vorhergehenden Ansprüche,
**dadurch gekennzeichnet,**
**dass** die erste strahlformende Struktur (30, 32) zwei einander gegenüberliegende liegende Grenzflächen aufweist, welche sich zumindest hinsichtlich ihres Neigungswinkels in Bezug auf eine optische Achse (A) des Strahlformungselements (28) voneinander unterscheiden.

4. Lichtschranke (10) nach einem der vorhergehenden Ansprüche,
**dadurch gekennzeichnet,**
**dass** mehrere in Reihe angeordnete Paare von Lichtsendern (26) und Lichtempfängern (24) vorgesehen sind.

5. Lichtschranke (10) nach Anspruch 4,
**dadurch gekennzeichnet,**
**dass** die erste strahlformende Struktur zwei einander gegenüberliegende Grenzflächen aufweist, welche sich zumindest hinsichtlich ihres Neigungswinkels in Bezug auf eine optische Ebene des Strahlformungselementes voneinander unterscheiden.

6. Lichtschranke (10) nach einem der Ansprüche 3 oder 5,
**dadurch gekennzeichnet,**
**dass** die Neigungswinkel der Grenzflächen derart gewählt sind, dass sich der Abstand der Grenzflächen zueinander in Richtung eines distalen Endes der ersten strahlformenden Struktur (30, 32) vermindert.

7. Lichtschranke (10) nach einem der Ansprüche 3, 5 oder 6,
**dadurch gekennzeichnet,**
**dass** zumindest eine der Grenzflächen gekrümmt ist.

8. Lichtschranke (10) nach einem der vorhergehenden Ansprüche,
**dadurch gekennzeichnet,**
**dass** das Strahlformungselement (28) zumindest eine zweite strahlformende Struktur (30, 32) aufweist, welche auf einer der ersten strahlformenden Struktur (34, 36) gegenüberliegenden Seite des Strahlformungselements (28) angeordnet ist und dazu ausgelegt ist, die Ausbreitungsrichtung von durchtretendem Licht refraktiv zu verändern.

9. Lichtschranke (10) nach Anspruch 8,
**dadurch gekennzeichnet,**
**dass** die die zweite strahlformende Struktur (34, 36) konvex gekrümmt ist.

10. Lichtschranke nach Anspruch 8 oder 9,
**dadurch gekennzeichnet,**
**dass** einer jeweiligen ersten strahlformenden Struktur (30, 32) eine jeweilige zweite strahlformende Struktur (34, 36) derart zugeordnet ist, dass durch die zweite strahlformende Struktur (34, 36) hindurch in das Strahlformungselement (28) eintretendes Licht in Richtung auf die erste strahlformende Struktur (30, 32) gelenkt, insbesondere gebündelt, wird.

11. Lichtschranke (10) nach einem der vorhergehenden Ansprüche,
**dadurch gekennzeichnet,**
**dass** die erste strahlformende Struktur (30, 32) und/oder die zweite strahlformende Struktur (34, 36) rotationssymmetrisch um eine optische Achse (A) oder symmetrisch zu einer optischen Ebene des Strahlformungselements (28) ausgebildet sind.

12. Lichtschranke (10) nach einem der vorhergehenden Ansprüche,
**dadurch gekennzeichnet,**
**dass** die Lichtschranke (10) zumindest ein Gehäuse (16) umfasst, welches eine Frontscheibe (18) aufweist, wobei das zumindest eine Strahlformungselement (28) in die Frontscheibe (18) integriert ist und insbesondere einstückig mit der Frontscheibe (18) ausgebildet ist.

## Claims

1. A light barrier (10) comprising at least one light transmitter (26) for transmitting light into a monitored zone; at least one light receiver (24) for receiving light from the monitored zone; and at least one beam-shaping element (28) which is associated with the light receiver (24) and which is configured to bundle light from the monitored zone onto the light receiver (24),
**characterized in that**
the beam-shaping element (28) has at least one first beam-shaping structure (30, 32) which is configured to at least partly reflect light entering into the first beam-shaping structure (30, 32) once or a plurality of times at a respective inner boundary surface of the first beam-shaping structure (30, 32) in dependence on the entry angle of said light such that the exit angle of the light exiting the first beam-shaping structure (30, 32) differs from the entry angle;
**in that** at least one further beam-shaping element (28) associated with the light transmitter (26) is provided and is configured, at least with regard to the beam-shaping structures (30 - 36), identically to the beam-shaping element (28) associated with the light receiver (24);
**in that** at least one of the beam-shaping elements (28) has a central region (38) which surrounds an optical axis (A) or an optical plane of the beam-shaping element (28), which does not have any of the named beam-shaping structures (30 - 36) and is planar at at least one side; and
**in that** the central region (38) of the beam-shaping element (28) associated with the light receiver (24) is impermeable to light.

2. A light barrier (10) in accordance with claim 1,
**characterized in that**
the first beam-shaping structure (30, 32) is provided at a side of the beam-shaping element (28) facing the light receiver (24), with the beam-shaping element being associated with the light receiver (24).

3. A light barrier (10) in accordance with one of the preceding claims,
**characterized in that**
the first beam-shaping structure (30, 32) has two mutually oppositely disposed boundary surfaces which at least differ from one another with regard to their angles of inclination with respect to an optical axis (A) of the beam-shaping element (28).

4. A light barrier (10) in accordance with any one of the preceding claims,
**characterized in that**
a plurality of light transmitters (26) and light receivers (24) arranged in pairs are provided.

5. A light barrier (10) in accordance with claim 4,
**characterized in that**
the first beam-shaping structure has two mutually oppositely disposed boundary surfaces which at least differ from one another with regard to their angles of inclination with respect to an optical plane of the beam-shaping element.

6. A light barrier (10) in accordance with one of the claims 3 or 5,
**characterized in that**
the angles of inclination of the boundary surfaces are selected such that the spacing of the boundary surfaces from one another decreases in the direction of a distal end of the first beam-shaping structure (30, 32).

7. A light barrier (10) in accordance with any one of the claims 3, 5 or 6,
**characterized in that**
at least one of the boundary surfaces is curved.

8. A light barrier (10) in accordance with any one of the preceding claims,
**characterized in that**
the beam-shaping element (28) has at least one second beam-shaping structure (30, 32) which is arranged at a side of the beam-shaping element (28) opposite the first beam-shaping structure (34, 36) and which is configured to refractively change the direction of propagation of light passing through.

9. A light barrier (10) in accordance with claim 8,
**characterized in that**
the second beam-shaping structure (34, 36) is convexly curved.

10. A light barrier in accordance with claim 8 or claim 9,
**characterized in that**
a respective second beam-shaping structure (34, 36) is associated with a respective first beam-shaping structure (30, 32) such that light entering the beam-shaping element (28) through the second beam-shaping structure (34, 36) is directed, in particular bundled, in the direction of the first beam-shaping structure (30, 32).

11. A light barrier (10) in accordance with any one of the preceding claims,
**characterized in that**
the first beam-shaping structure (30, 32) and/or the second beam-shaping structure (34, 36) is/are configured rotationally symmetrically about an optical axis (A) or symmetrically to an optical plane of the beam-shaping element (28).

12. A light barrier (10) in accordance with any one of the preceding claims,
**characterized in that**
the light barrier (10) comprises at least one housing (16) which has a front screen (18), with the at least one beam-shaping element (28) being integrated into the front screen (18) and in particular being formed in one piece with the front screen (18).

## Revendications

1. Barrière lumineuse (10) comportant au moins un émetteur de lumière (26) pour émettre de la lumière dans une zone à surveiller, au moins un récepteur de lumière (24) pour recevoir la lumière depuis la zone à surveiller, et au moins un élément de formage de rayon (28) associé au récepteur de lumière (24) et conçu pour focaliser la lumière de la zone à surveiller sur le récepteur de lumière (24),
**caractérisée en ce que**
l'élément de formage de rayon (28) présente au moins une première structure de formage de rayon (30, 32) qui est conçue pour réfléchir au moins partiellement la lumière entrant dans la première structure de formage de rayon (30, 32), en fonction de son angle d'entrée, une fois ou plusieurs fois sur une surface limite intérieure respective de la première structure de formage de rayon (30, 32), de sorte que l'angle de sortie de la lumière sortant de la première structure de formage de rayon (30, 32) se distingue de l'angle d'entrée,
**en ce qu'**il est prévu au moins un autre élément de formage de rayon (28) qui est associé à l'émetteur de lumière (26) et qui, au moins en ce qui concerne les structures de formage de rayon (30 - 36), est réalisé de façon identique à l'élément de formage de rayon (28) associé au récepteur de lumière (24),
**en ce que** l'un au moins des éléments de formage de rayon (28) comprend une zone centrale (38) entourant un axe optique (A) ou un plan optique de l'élément de formage de rayon (28), qui ne présente aucune des structures de formage de rayon mentionnées (30 - 36) et qui est plan sur au moins un côté, et
**en ce que** la zone centrale (38) de l'élément de formage de rayon (28) associé au récepteur de lumière (24) est opaque.

2. Barrière lumineuse (10) selon la revendication 1,
**caractérisée en ce que**
la première structure de formage de rayon (30, 32) est prévue sur un côté de l'élément de formage de rayon (28) associé au récepteur de lumière, qui est tourné vers le récepteur de lumière (24).

3. Barrière lumineuse (10) selon l'une des revendications précédentes,
**caractérisée en ce que**
la première structure de formage de rayon (30, 32) présente deux surfaces limites opposées l'une à l'autre, qui se distinguent l'une de l'autre au moins en ce qui concerne leur angle d'inclinaison par rapport à un axe optique (A) de l'élément de formage de rayon (28).

4. Barrière lumineuse (10) selon l'une des revendications précédentes,
**caractérisée en ce que**
il est prévu plusieurs paires d'émetteurs de lumière (26) et de récepteurs de lumière (24) agencées en série.

5. Barrière lumineuse (10) selon la revendication 4,
**caractérisée en ce que**
la première structure de formage de rayon présente deux surfaces limites opposées l'une à l'autre, qui se distinguent l'une de l'autre au moins en ce qui concerne leur angle d'inclinaison par rapport à un plan optique de l'élément de formage de rayon.

6. Barrière lumineuse (10) selon l'une des revendications 3 ou 5,
**caractérisée en ce que**
les angles d'inclinaison des surfaces limites sont choisis de telle sorte que la distance des surfaces limites l'une de l'autre se réduit en direction d'une extrémité distale de la première structure de formage de rayon (30, 32).

7. Barrière lumineuse (10) selon l'une des revendications 3, 5 ou 6,
**caractérisée en ce que**
l'une au moins des surfaces limites est incurvée.

8. Barrière lumineuse (10) selon l'une des revendications précédentes,
**caractérisée en ce que**
l'élément de formage de rayon (28) comprend au moins une seconde structure de formage de rayon (30, 32) qui est agencée sur un côté de l'élément de formage de rayon (28) opposé à la première structure de formage de rayon (34, 36) et qui est conçue pour modifier par voie réfractive la direction de propagation de la lumière traversante.

9. Barrière lumineuse (10) selon la revendication 8,
**caractérisée en ce que**
la seconde structure de formage de rayon (34, 36) est incurvée de façon convexe.

10. Barrière lumineuse selon la revendication 8 ou 9,
**caractérisée en ce que**
une seconde structure de formage de rayon respective (34, 36) est associée à une première structure de formage de rayon respective (30, 32) de telle sorte que la lumière entrant dans l'élément de formage de rayon (28) à travers la seconde structure de formage de rayon (34, 36) est dirigée, en particulier focalisée, en direction de la première structure de formage de rayon (30, 32).

11. Barrière lumineuse (10) selon l'une des revendications précédentes,
**caractérisée en ce que**
la première structure de formage de rayon (30, 32) et/ou la seconde structure de formage de rayon (34, 36) sont réalisées à symétrie de révolution autour d'un axe optique (A) ou à symétrie par rapport à un plan optique de l'élément de formage de rayon (28).

12. Barrière lumineuse (10) selon l'une des revendications précédentes,
**caractérisée en ce que**
la barrière lumineuse (10) comprend au moins un boîtier (16) qui comprend un panneau frontal (18), ledit au moins un élément de formage de rayon (28) étant intégré dans le panneau frontal (18) et étant en particulier réalisé d'un seul tenant avec le panneau frontal (18).
